# EUROPÄISCHE PATENTSCHRIFT

(11) **EP 0 651 700 B1**
(45) Veröffentlichungstag und Bekanntmachung des Hinweises auf die Patenterteilung: **05.03.1997**
(21) Anmeldenummer: 93915764.0
(22) Anmeldetag: 01.07.1993
(51) Int. Cl.: B32B 31/00, B29C 44/06, B60R 13/08

(54) **TEXTILE OBERBÖDEN IN KRAFTFAHRZEUGEN**
TEXTILE FLOOR COVERINGS IN MOTOR VEHICLES
REVETEMENTS TEXTILES POUR PLANCHERS DE VEHICULES AUTOMOBILE

(30) Priorität: 04.07.1992 DE 4222023
(43) Veröffentlichungstag der Anmeldung: 10.05.1995
(73) Patentinhaber: HP-CHEMIE PELZER RESEARCH & DEVELOPMENT Ltd., Waterford, County Waterford (IE)
(72) Erfinder: PELZER, Helmut, D-58454 Witten (DE)
(74) Vertreter: Jönsson, Hans-Peter, Dr.Dipl.-Chem.
(86) Internationale Anmeldenummer: EP9301699
(87) Internationale Veröffentlichungsnummer: WO9401278

(56) Entgegenhaltungen:
- EP-A- 0 278 393
- DE-A- 3 623 789
- DE-A- 3 710 731
- GB-A- 2 245 570
- US-A- 4 255 482
- DATABASE WPI Week 8619, Derwent Publications Ltd., London, GB; AN 86-122433 & JP-A-61 061 842 (HAYASHI TELENP.) 29. März 1986
- INGENIEURS DE L'AUTOMOBILE Nr. 653, Dezember 1989, COURBEVOIE Seiten 110 - 115 H. LEBRESNE ET AL. 'INSONORISANTS PAR COMPLEXE PHONO-ISOLANT SOUPLE'

## Beschreibung

Die Erfindung betrifft textile Oberböden für Kraftfahrzeuge und ein Verfahren zu ihrer Herstellung.

Textile Oberböden in Kraftfahrzeugen an sich sind bekannt. Diese werden üblicherweise dadurch hergestellt, daß man zunächst einen textilen Bodenbelag in einer Matrizenform des Bodenbleches des Kraftfahrzeuges formt. Bedingt durch den Getriebetunnel oder auf den Bodenblechen befindlichen Erhöhungen oder Vertiefungen treten hierbei Höhendifferenzen von wenigen Millimetern bis mehreren Zentimetern auf.

Üblicherweise werden rückenbeschichtete, Velours- oder Nadelfilzbodenbeläge eingesetzt. Zur verbesserten Schallisolierung werden bei hochwertigen Fahrzeugen die Bodenbeläge mit einer sogenannten Schwerfolie versehen. Hierbei handelt es sich beispielsweise um eine bis zu 70 Gew.-% Füllstoff enthaltende EPDM-Folie.

Das so erhaltene Laminat aus rückenbeschichtetem Teppichboden und Schwerfolie wird üblicherweise der Verformung unterzogen.

Zum Ausgleich der Bodenunebenheiten des Bodenbleches und zur Schallabsorption wird im Stand der Technik mit Hilfe des Hinterspritzverfahrens ein Absorptions-Schaumrücken auf das oben genannte Laminat aufgebracht. Insbesondere ist im Stand der Technik die Verwendung eines gefüllten Zweikomponenten-Polyurethanschaums (Schwerschaum) bevorzugt, der in das Werkzeug eingespritzt wird. Dieser Polyurethanschaum ist im Verbund mit der Schwerfolie akustisch wirksam.

Ein besonderes Problem ist gegeben, wenn Schaumstofflocken, beispielsweise recyclierte Flocken, mit in das System eingebracht werden sollen. Schwierigkeiten treten dadurch auf, daß über die gesamte Fläche des textilen Bodenbelags die Dichte des hinterspritzten Absorptionsschaums möglichst gleichmäßig sein sollte. Unterschiedliche Dichten bewirken Störungen des Schallabsorptionssystems und damit eine verminderte akustische Wirksamkeit. Bedingt durch die geringe Dichte der Flocken gestaltet sich das Einbringen in das Werkzeug durch Rückstellkräfte der Schaumstofflocken schwierig. Auch das Vorhandensein eines geeigneten Bindemittels kann diese Probleme nicht beseitigen.

Aus DE 40 15 413 A1 ist die Herstellung eines Formteils beliebiger Form und Größe aus Recyclierungstoffen bekannt. Das Formteil besteht aus Schaumstoffen bzw. Schaumstoffabfällen, die in Flockenform gerissen und mit einem Ein-Komponenten-Binder auf der Basis von Mais- und/oder Weizenstärke innig vermischt werden. Eine Verklebung der Formteile mit anderen Gegenständen wird nicht beschrieben.

Die DE 34 30 775 C2 betrifft ein Teppichteil, ein Verfahren zu seiner Herstellung und seine Verwendung. Danach wird ein Teppichteil zur Schallisolation, insbesondere in Kraftfahrzeugen, aus einem Teppich und einer darunter angeordneten oder mit dem Teppich eine ein einheitliches Ganzes bildenden Schwerschicht und einer darunter angeordneten synthetischen Unterschicht bereitgestellt, wobei die Unterschicht aus einer Kombination von Schaumstoff oder Vliesschichten mit verschiedenen Störmungswiderständen besteht. Die Schichtfolge besteht beispielsweise aus Teppich, Schwerschicht, Schaumstoffschicht mit relativ hohem Strömungswiderstand und einer Schaumstoffschicht mit relativ niedrigem Strömungswiderstand.

DE 36 23 789 A1 betrifft ein zweidimensional verformtes Abdeckelement für schwingende Flächen, vorzugsweise in Kraftfahrzeugen, gekennzeichnet durch die Kombination folgender Merkmale:
- viskoelstischer PUR-Schaum mit eingeschäumten, mechanisch hartelastischen Verbundschaumstücken,
- Kupplungsvlies,
- thermoplastische Schwerschicht,
- Textilteppich mit Kunststoffbindung und
- Thermoplastfolie.
Das Abdeckelement ist insbesondere im Boden- und Stirnwandbereich von Kraftfahrzeugen einsetzbar.

Aus der JP-A-61-0611842 ist ebenfalls ein elastisches Abdeckmaterial bekannt, bei dem jedoch zerkleinerte Teppichbodenreste, zerkleinerte Polyurethanschaumreste sowie eine Lösung eines Urethanprepolymers in einem organischen Lösungsmittel zur Herstellung von ungewebten textilen Belägen eingesetzt werden. Das so erhaltene Material wird als Polstermaterial, inbesondere als Schallisolationsmaterial mit verbesserter Elastizität und Dämpfungswirkung eingesetzt.

Die Aufgabe der vorliegenden Erfindung besteht darin, unter Verwendung von Schaumstofflocken ein Rückseitendämpfungsmaterial eines textilen Bodenbelags für Kraftfahrzeuge zur Verfügung zu stellen.

Dementsprechend war es bisher im Stand der Technik nicht möglich, Schaumstofflocken in einer gewünschten Dichte in befriedigender Weise als Ersatz von Absorptionsschaum bei textilen Oberböden in Kraftfahrzeugen zu integrieren.

Die vorstehende Aufgabe wird erfindungsgemäß gelöst durch
(a) Aufrakeln eines Gemisches aus Schaumstofflocken und einem selbsthärtenden Bindemittel in einer Matrizenform des Bodenblechs 1 des Kraftfahrzeugs in einem gewünschten Schichtdickenprofil,
(b) Aufbringen mittels Pressen des mit einer Schwerfolie versehenen, gegebenenfalls vorgeformten textilen Bodenbelages auf das Gemisch, unter Einstellung der gewünschten Schaumstofflockendichte,
(c) Aktivieren des Bindemittels und
(d) Verkleben des Gemisches aus mit der Schwerfolie des textilen Bodenbelages.

Desweiteren wird die gestellte Aufgabe durch einen textilen Oberboden gemäß Anspruch 12 gelöst.
Zweckmäßige Weiterbildungen der Erfindung sind in den abhängigen Ansprüchen beschrieben.
Ausführungsbeispiele der Erfindung sind in der Zeichnung dargestellt und werden im folgenden näher erörtert.

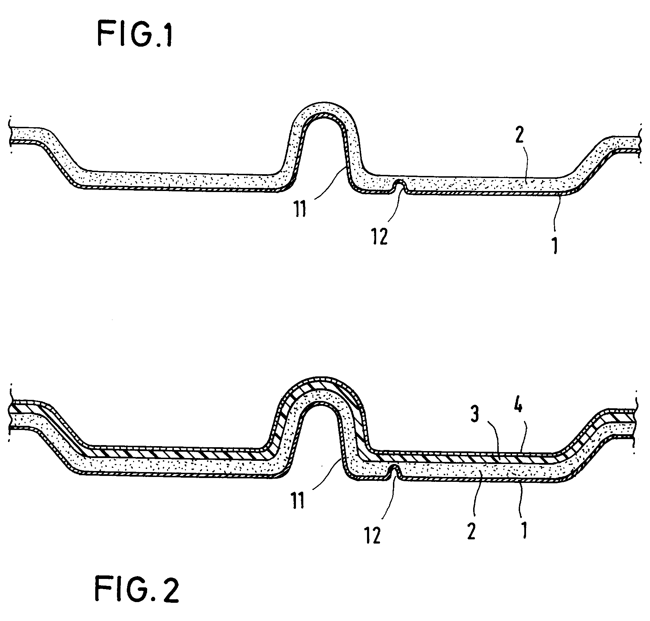

In der Fig. 1 ist eine Matrizenform eines Bodenblechs 1 eines Kraftfahrzeuges wiedergegeben. Der Getriebetunnel 11 und ein Kabelschacht 12 ragen aus der ansonsten ebenen Matrizenform heraus. Während der Kabelschacht 12 von der Oberseite der aufgerakelten Schicht 2 aus Schaumstofflocken und selbsthärtendem Bindemittel nicht sichtbar ist, wird der Getriebetunnel 11 von dem Gemisch mit konstanter Schichtdicke umschlossen.

Das Aufrakeln des Gemisches 2 aus Schaumstofflocken und selbsthärtendem Bindemittel als Absorptionsschaum in die Matrizenform 1 erlaubt ein Freisetzen der Rückstellkräfte der bereits in der Matrizenform 1 bei Raumtemperatur. Dadurch kann eine weitgehend ebene Oberfläche dieses Gemisches 2 mit Inselstruktur und eine gleichmäßige Dichte entsprechend einer gleichmäßigen Verteilung des Schaumstoffs in dem Bindemittel erhalten werden, die besonders gut zur Verklebung mit der Schwerfolie 3 geeignet ist. Zur Vermeidung von Verklebungen des Absorptionsschaums mit der Matrizenform 1 können gegebenenfalls an sich bekannte Formtrennungsmittel eingesetzt werden.

In der Fig.2 wird der vollständige Aufbau der erfindungsggemäßen textilen Oberböden in Kraftfahrzeugen in der Matrizenform des Bodenblechs 1 wiedergegeben. Auf der Schicht 2 aus Schaumstofflocken und selbsthärtendem Bindemittel befindet sich die Schwerfolie 3, die ihrerseits mit dem textilen Oberboden 4 verbunden ist.

Beispielsweise durch Verpressen des mit einer Schwerfolie 3 versehenen textilen Bodenbelages 4 und Erhitzen des Laminats ist es möglich, eine gut haftende Verklebung des Absorptionsschaums mit der Schwerfolie 3 zu erreichen. Die gleichmäßige Dichte des Absorptionsschaums über das gesamte Volumen des Gemisches 2 bewirkt eine gleichmäßige Schallabsorptions-Qualität.

Das erfindungsgemäße Verfahren ermöglicht somit in einem großen Umfang die Wiederverwendung von Schaumstofflocken, die beispielsweise bei der Herstellung von anderen Gegenständen als Abfallmaterialien anfallen. In einer bevorzugten Ausführungsform der vorliegenden Erfindung wird ein Gemisch aus 70 bis 99 Vol.-% Schaumstofflocken und 1 bis 30 Vol.-% Bindemittel in eine Matrizenform des Bodenblechs 1 des Kraftfahrzeuges aufgerakelt. Eine weiter bevorzugte Ausführungsform der vorliegenden Erfindung besteht im Aufrakeln eines Gemisches aus 75 bis 90 Vol.-% Schaumstofflocken und 10 bis 25 Vol.-% Bindemittel.

Die Größe der Schaumstofflocken ist von geringerer Bedeutung, sie sollte jedoch nicht die geringste Schichtdicke des Absorptionsschaumes, beispielsweise oberhalb des Kabelschachtes 12, überschreiten, da sonst keine ausreichend glatte Oberfläche zum Aufbringen des textilen Bodenbelags 4 geschaffen wird. Dementsprechend ist es besonders bevorzugt, Schaumstofflocken in einer Größe von 1 bis 30 mm einzusetzen. Da üblicherweise die Dicke des Absorptionsschaums zur Herstellung von textilen Oberböden 4 in Kraftfahrzeugen stellenweise etwa 2 bis 100 mm, insbesondere 5 bis 80 mm beträgt, ist bei einer so gewählten Größe der Schaumstofflocken gewährleistet, daß die Rückstellkräfte der Schaumstofflocken nicht zu einer Verschlechterung der Oberflächenqualität des Absorptionsschaums führen.

Die Auswahl des selbsthärtenden Bindemittels unterliegt praktisch keinen Begrenzungen, solange das Bindemittel geeignet ist, die eingesetzten Schaumstofflocken ausreichend fest zu verbinden und eine ausreichende Elastizität aufweist, um akustisch wirksam zu sein. Darüberhinaus ist eine ausreichende Benetzung der Schaumstofflocken erforderlich, um einen festen Verbund zu schaffen. Auch muß eine gute Verbindung mit der Schwerfolie 3 möglich sein.

Dementsprechend besteht eine bevorzugte Ausführungsform der vorliegenden Erfindung darin, daß man als Bindemittel ein Phenolharz, ein Einkomponenten-Polyurethan oder eine Latexemulsion, gegebenenfalls gefüllt mit Polyolefinfasern, beispielsweise Polypropylenfasern, einsetzt.

In derartigen Gemischen 1 aus Schaumstofflocken und Bindemittel können die Bindemittelaktivitäten, beispielsweise durch Einwirkung von Temperatur, Wasserdampf und/oder Druck aktiviert werden. Hierbei tritt eine Aushärtung des gegebenenfalls thermoplastischen elastischen Bindemittels ein, die zu einem akustisch wirksamen Absorptionsschaum führt, der über das gesamte Volumen in etwa die gleiche Dichte aufweist. Somit sind die Schallabsorptionseigenschaften über das gesamte Volumen annähernd gleich.

Zur Schaffung der Verbindung zwischen dem Gemisch 2 aus Schaumstofflocken und selbsthärtendem Bindemittel einerseits und der Schwerfolie 3 andererseits gibt es verschiedene Möglichkeiten.

In einer ersten Variante des erfindungsgemäßen Verfahrens werden daher der Absorptionsschaum einerseits und die Schwerfolie 3 andererseits ohne dazwischenliegende Klebeschicht durch die Selbsthärtung des Bindemittels verklebt. Bei dieser Variante wird beispielsweise das gegebenenfalls vorgeformte Laminat aus Schwerfolie 3 und textilem Bodenbelag 4 auf den noch nicht ausgehärteten Absorptionsschaum aufgebracht und durch entsprechende Aktivierung, beispielsweise Temperaturerhöhung, das Bindemittel ausgehärtet und so mit der Schwerfolie 3 verbunden. Die Bindemittel können reine Thermoplaste, Duroplaste oder eine geeignete Kombination von beiden sein.

Als Schwerfolie 3 kann beispielsweise im Rahmen der vorliegenden Erfindung eine handelsübliche, mit bis zu 70 Gew.-% Füllstoffanteilen gefüllte EPDM-Schwerfolie, eingesetzt werden.

In einer weiteren Variante der vorliegenden Erfindung ist es möglich, daß man vor dem Aufbringen des mit einer Schwerfolie 3 versehenen texilen Bodenbelages 4 das Gemisch 2 aus Schaumstofflocken und selbsthärtendem Bindemittel aktiviert und die Verklebung mittels einer Klebstoffschicht zwischen dem Gemisch 2 und der Schwerfolie 3 vornimmt. Gemäß dieser Variante ist es geboten, zunächst das selbsthärtende Bindemittel zu aktivieren und den Absorptionsschaum in seiner späteren geometrischen Form zu bilden,bevor die Klebstoffschicht aufgebracht wird. Nach Aufbringen einer Klebstoffschicht auf das ausgehärtete Gemisch 2 aus Schaumstofflocken und selbsthärtendem Bindemittel und/oder der Schwerfolie und Aktivieren der Klebstoffschicht nach dem Verbinden der Teile miteinander kann so der gewünschte textile Oberboden erhalten werden.

Besonders bevorzugt im Sinne der vorliegenden Erfindung ist der Einsatz einer Klebstoffschicht, beispielsweise aus an sich bekannten Schmelzklebern oder einem gegebenenfalls wärmeaktivierbaren Polyethylenkleber, Polypropylenkleber und/oder einem Latexkleber.

Als textiler Bodenbelag 4 im Sinne der vorliegenden Erfindung kann ein im Stand der Technik bekannter rückenbeschichteter Velours- oder Nadelfilz eingesetzt werden. Vorzugsweise wird das Laminat aus rückenbeschichtetem Velours- oder Nadelfilz-Belag und Schwerfolie 3 vor dem Aufbringen auf den Absorptionsschaum entsprechend vorgeformt. In gleicher Weise ist es jedoch möglich, die Verformung des textilen Belages beim Verbinden mit dem Absorptionsschaum vorzunehmen.

## Patentansprüche

1. Verfahren zur Herstellung von textilen Oberböden in Kraftfahrzeugen durch
a) Aufrakeln eines Gemisches (2) aus Schaumstofflocken und einem selbsthärtenden Bindemittel in einer Matrizenform des Bodenblechs des Kraftfahrzeugs (1) in einem gewünschten Schichtdickenprofil,
b) Aufbringen mittels Pressen des mit einer Schwerfolie (3) versehenen, gegebenenfalls vorgeformten textilen Bodenbelages (4) auf das Gemisch (2) unter Einstellung der gewünschten Schaumstofflockendichte,
c) Aktivieren des Bindemittels und
d) Verkleben des Gemisches (2) mit der Schwerfolie (3) des textilen Bodenbelages.

2. Verfahren nach Anspruch 1, dadurch gekennzeichnet, daß man ein Gemisch (2) aus 70 bis 99 Vol.-% Schaumstofflocken und 1 bis 30 Vol.-% Bindemittel aufrakelt.

3. Verfahren nach Anspruch 1, dadurch gekennzeichnet, daß man ein Gemisch aus 75 bis 90 Vol.-% Schaumstofflocken und 10 bis 25 Vol.-% Bindemittel aufrakelt.

4. Verfahren nach einem oder mehreren der Ansprüche 1 bis 3, dadurch gekennzeichnet, daß man Schaumstofflocken einer Größe von 1 bis 30 mm einsetzt.

5. Verfahren nach einem oder mehreren der Ansprüche 1 bis 4, dadurch gekennzeichnet, daß man als Bindemittel ein Phenolharz, ein Einkomponenten-Polyurethan oder eine Latexemulsion, gegebenenfalls gefüllt mit Polyolefinfasern, insbesondere Polypropylenfasern, einsetzt.

6. Verfahren nach einem oder mehreren der Ansprüche 1 bis 5, dadurch gekennzeichnet, daß man das Bindemittel durch Einwirkung von Temperatur, Wasserdampf und/oder Druck aktiviert.

7. Verfahren nach einem oder mehreren der Ansprüche 1 bis 6, dadurch gekennzeichnet, daß man als Schwerfolie (3) eine mit bis zu 70 Gew.-% Füllstoffanteilen gefüllte EPDM-Schwerfolie einsetzt.

8. Verfahren nach einem oder mehreren der Ansprüche 1 bis 7, dadurch gekennzeichnet, daß man das Gemisch (2) einerseits und Schwerfolie (3) andererseits ohne dazwischenliegende Klebstoffschicht durch die Selbsthärtung des Bindemittels verklebt.

9. Verfahren nach einem oder mehreren der Ansprüche 1 bis 7, dadurch gekennzeichnet, daß man vor dem Aufbringen des mit einer Schwerfolie (3) versehenen textilen Bodenbelages (4) das Gemisch (2) aktiviert und die Verklebung mittels einer Klebstoffschicht zwischen dem Gemisch (2) und der Schwerfolie (3) vornimmt.

10. Verfahren nach Anspruch 9, dadurch gekennzeichnet, daß man als Klebstoffschicht einen Schmelzkleber, einen gegebenenfalls wärmeaktivierbaren Polyethylenkleber, einen Polypropylenkleber und/oder einen Latexkleber einsetzt.

11. Verfahren nach einem oder mehreren der Ansprüche 1 bis 10, dadurch gekennzeichnet, daß man als textilen Bodenbelag (4) einen rückenbeschichteten Velours- oder Nadelfilz-Belag einsetzt.

12. Textiler Oberboden für Kraftfahrzeuge, erhältlich nach einem Verfahren gemäß einem oder mehreren der Ansprüche 1 bis 11, umfassend die Schichtenfolge:
a) Schaumstofflocken in einem selbsthärtenden Bindemittel,
b) Schwerfolie (3) und
c) textiler Bodenbelag (4),
wobei die Verbindung zwischen dem Gemisch (2) und der Schwerfolie (3) und dem textilen Bodenbelag (4) gegebenenfalls durch eine Klebstoffschicht gebildet ist.

## Claims

1. A process for the preparation of textile floor coverings in motor vehicles by
(a) knife coating a mixture (2) of foam off-cuts and a self-curing binder in a matrix form of the floor panel of motor vehicle (1) in a desired layer thickness profile;
(b) applying by pressing the optionally premolded textile carpet (4) provided with a heavy layer (3) on said mixture (2) while adjusting the desired density of the foam off-cuts;
(c) activating said binder, and
(d) bonding said mixture (2) to said heavy layer (3) of the textile carpet.

2. The process according to claim 1, characterized in that a mixture (2) of from 70 to 99% by volume of foam off-cuts and from 1 to 30% by volume of binder is knife coated.

3. The process according to claim 1, characterized in that a mixture of from 75 to 90% by volume of foam off-cuts and from 10 to 25% by volume of binder is knife coated.

4. The process according to one or more of claims 1 to 3, characterized in that foam off-cuts having a size of from 1 to 30 mm are employed.

5. The process according to one or more of claims 1 to 4, characterized in that a phenol resin, a one-component polyurethane, or a latex emulsion, optionally filled with polyolefin fibers, in particular polypropylene fibers, is used as said binder.

6. The process according to one or more of claims 1 to 5, characterized in that said binder is activated by action of temperature, water vapor and/or pressure.

7. The process according to one or more of claims 1 to 6, characterized in that an EPDM heavy sheet filled with up to 70% by weight of filler contents is used as said heavy layer (3).

8. The process according to one or more of claims 1 to 7, characterized in that said mixture (2) on one hand and said heavy layer (3) on the other hand are bonded together by the self-curing of said binder, without an intermediate adhesive layer.

9. The process according to one or more of claims 1 to 7, characterized in that said mixture (2) is activated prior to applying said textile carpet (4) provided with heavy layer (3) and the bonding between said mixture (2) and said heavy layer (3) is realized by means of an adhesive layer.

10. The process according to claim 9, characterized by using a hot-melt adhesive, an optionally heat-activatable polyethylene adhesive, a polypropylene adhesive and/or a latex adhesive as said adhesive layer.

11. The process according to one or more of the claims 1 to 10, characterized by using a backside coated velours or needled felt layer as said textile carpet (4).

12. A textile floor covering for motor vehicles, obtainable by the process according to one or more of claims 1 to 11, comprising the layers, in order:
(a) foam off-cuts in a self-curing binder;
(b) heavy layer (3); and
(c) textile carpet (4);
wherein the bonding between said mixture (2) and heavy layer (3) and said textile carpet is optionally realized by means of an adhesive layer.

## Revendications

1. Procédé de fabrication de revêtements textiles pour planchers de véhicules automobiles, comprenant les étapes suivantes :
a) on applique à la lame un mélange (2) de flocons de matière alvéolaire et d'un agent liant autodurcissable dans un moule de matrice correspondant à la forme de la tôle du plancher du véhicule automobile (1) selon un profil souhaité d'épaisseur de couche,
b) on applique, au moyen de presses, le revêtement textile (4) de plancher éventuellement préformé, pourvu d'une feuille de matière lourde (3), sur le mélange (2) en réglant l'épaisseur souhaitée des flocons de matière alvéolaire,
c) on active l'agent liant, et
d) on colle le mélange (2) à la feuille de matière lourde (3) du revêtement textile de plancher.

2. Procédé selon la revendication 1, caractérisé en ce qu'on applique un mélange (2) de 70 à 99 % en volume de flocons de matière alvéolaire et de 1 à 30 % en volume d'agent liant.

3. Procédé selon la revendication 1, caractérisé en ce qu'on applique un mélange de 75 à 90 % en volume de flocons de matière alvéolaire et de 10 à 25 % en volume d'agent liant.

4. Procédé selon une ou plusieurs des revendications 1 à 3, caractérisé en ce qu'on utilise des flocons de matière alvéolaire d'une taille de 1 à 30 mm.

5. Procédé selon une ou plusieurs des revendications 1 à 4, caractérisé en ce qu'on utilise comme agent riant une résine phénolique, un polyuréthane à un composant ou une émulsion de latex, éventuellement chargé(e) de fibres de polyoléfines, en particulier de fibres de polypropylène.

6. Procédé selon une ou plusieurs des revendications 1 à 5, caractérisé en ce qu'on active l'agent liant par intervention de température, de vapeur d'eau et/ou de pression.

7. Procédé selon une ou plusieurs des revendications 1 à 6, caractérisé en ce qu'on utilise comme feuille de matière lourde (3) une feuille lourde d'EPDM chargée d'une matière de charge en proportion pouvant atteindre 70 % en poids.

8. Procédé selon une ou plusieurs des revendications 1 à 7, caractérisé en ce qu'on colle le mélange (2), d'une part, et la feuille de matière lourde (3), d'autre part, sans couche de colle intermédiaire par autodurcissement de l'agent liant.

9. Procédé selon une ou plusieurs des revendications 1 à 7, caractérisé en ce qu'on active le mélange (2) avant l'application du revêtement textile de plancher (4) pourvu d'une feuille de matière lourde (3) et on effectue le collage entre le mélange (2) et la feuille de matière lourde (3) à l'aide d'une couche de colle.

10. Procédé selon la revendication 9, caractérisé en ce qu'on utilise comme couche de colle une colle fusible, une colle de polyéthylène éventuellement activable à la chaleur, une colle de polypropylène et/ou une colle de latex.

11. Procédé selon une ou plusieurs des revendications 1 à 10, caractérisé en ce qu'on utilise comme revêtement textile (4) de plancher un revêtement de velours ou de feutre aiguilleté enduit au verso.

12. Revêtement textile pour planchers de véhicules automobiles obtenu par un procédé selon une ou plusieurs des revendications 1 à 11, comprenant la succession de couches suivante :
a) des flocons de matière alvéolaire dans un agent liant autodurcissable,
b) une feuille de matière lourde (3), et
c) un revêtement textile (4) de plancher, la liaison entre le mélange (2) et la couche de matière lourde (3) et le revêtement textile (4) de plancher étant réalisée éventuellement par une couche de colle.
